# EUROPÄISCHE PATENTSCHRIFT

(11) **EP 2 331 376 B1**
(45) Veröffentlichungstag und Bekanntmachung des Hinweises auf die Patenterteilung: **24.04.2013**
(21) Anmeldenummer: 09783264.6
(22) Anmeldetag: 22.09.2009
(51) Int. Cl.: B60T 13/567

(54) **PNEUMATISCHER BREMSKRAFTVERSTÄRKER**
PNEUMATIC BRAKE BOOSTER
SERVOFREIN PNEUMATIQUE

(30) Priorität: 26.09.2008 DE 102008049167; 12.08.2009 DE 102009037232
(43) Veröffentlichungstag der Anmeldung: 15.06.2011
(73) Patentinhaber: Continental Teves AG & Co. oHG, 60488 Frankfurt (DE)
(72) Erfinder: WEISS, Andreas, 65812 Bad Soden (DE); FALLER, Jürgen, 63796 Kahl (DE); BISCHOFF, Adreas, 61118 Bad Vilbel (DE); ICKLER, Volker, 36275 Kirchheim (DE); JAKOBI, Ralf, 65439 Flörsheim (DE); MAINZ, Sven, 65795 Eddersheim (DE)
(86) Internationale Anmeldenummer: PCT/EP2009/062238
(87) Internationale Veröffentlichungsnummer: WO 2010/034701

(56) Entgegenhaltungen:
- DE-A1- 2 920 249
- DE-C1- 10 136 379

## Beschreibung

Die Erfindung betrifft einen pneumatischen Bremskraftverstärker in Tandembauweise, insbesondere für hydraulische Fahrzeugbremsanlagen mit einem Gehäuse aus einer ersten und einer zweiten Gehäusehalbschale, dessen Innenraum mit Hilfe eines Zwischenbodens in einen vorderen und einen hinteren Verstärkerraum unterteilt ist, wobei der Zwischenboden eine mittig angeordnete, kreisförmige Ausnehmung aufweist, welche von einem Steuergehäuse oder einer zylindrischen Steuergehäuseverlängerung durchgriffen ist und der Zwischenboden mittels eines Dichtelementes dichtend an dem Steuergehäuse oder der Steuergehäuseverlängerung anliegt, mit einer ersten sowie einer zweiten beweglichen Wand, die den vorderen bzw. den hinteren Verstärkerraum in eine erste Unterdruckkammer und in eine erste Arbeitskammer bzw. eine zweite Unterdruckkammer und in eine zweite Arbeitskammer unterteilen, mit wenigstens einem Verbindungskanal zwischen der ersten Arbeitskammer und der zweiten Arbeitskammer für einen Druckausgleich zwischen diesen beiden Arbeitskammern.

Ein derartiger Bremskraftverstärker ist beispielsweise aus der DE 195 39 601 A1 bekannt. Dieser weist eine so genannte Außenluftführung auf. Hierzu sind im Verbindungsbereich der Gehäusehalbschalen Verbindungskanäle zwischen den Arbeitskammern ausgebildet, welche durch eine Rippenstruktur in einem radial außenliegenden Dichtwulst einer ersten Rollmembran gebildet werden.

Aus der DE 198 32 357 A1 ist weiter ein Bremskraftverstärker bekannt, bei welchem die Arbeitskammern durch einen oder mehrere als zylindrische Hülse ausgebildete Verbindungskanäle verbunden sind. Die zylindrische Hülse durchdringt hierfür den Zwischenboden sowie die zweite bewegliche Wand und verfügt über einen Bund, mit dem sie an einer in eine Öffnung des Zwischenbodens eingeknöpfte Dichtung anliegt. Auf diesem Weg kann die erste Arbeitskammer bei Öffnung eines Steuerventils mit belüftet werden.

Dokument DE 2920249 offenbart einen pneumatischen Bremskraftverstärker gemäß dem Oberbegriff als Anspruchs 1.

Bei den bekannten Bremskraftverstärkern wird der Zwischenboden, der die erste Arbeitskammer von der zweiten Unterdruckkammer trennt, in das Gehäuse eingelegt und durch die erste Rollmembran fixiert. Bei Betätigung des Bremskraftverstärkers ergibt sich durch die Belüftung der ersten Arbeitskammer ein Druckunterschied, wobei dieser Druck über den Zwischenboden auf dem Gehäuse lastet.
Diese Belastung des Gehäuses bedingt zwangsläufig eine stabilere Auslegung des Gehäuses. Aus diesem Grund wird für das Gehäuse ein dickeres Blech verwendet, welches in Hinblick auf Gewicht und Kosten als nachteilig angesehen wird.

Es ist daher Aufgabe der Erfindung, einen dahingehend verbesserten Bremskraftverstärker bereitzustellen.

Die Aufgabe wird erfindungsgemäß dadurch gelöst, dass der Verbindungskanal als zylindrische Hülse vorgesehen ist, welche den Zwischenboden sowie die zweite bewegliche Wand durchdringt, wobei die Hülse eine Kraftableitung von dem Zwischenboden in eine fahrzeugfeste Wand ermöglicht. Hierdurch wird die bei Betätigung entstehende rückwärts gerichtete Kraft über die Hülse in die fahrzeugfeste Wand (Spritzwand) eingeleitet, ohne das Gehäuse zusätzlich zu belasten. Der Zwischenboden ist damit weitgehend vom Gehäuse entkoppelt gelagert. Durch diese Maßnahmen ist es möglich, die Blechdicke des Gehäuses deutlich zu verringern. Zudem ist es durch diese Ausgestaltung der Luftführung und der Kraftableitung möglich, den Zwischenboden vereinfacht auszugestalten.

Die Kraftableitung in die fahrzeugfeste Wand kann in einfacher Weise vorgesehen werden, indem sich die Hülse mittelbar oder unmittelbar an der zweiten Gehäusehalbschale abstützt.

Die Kraftableitung von dem Zwischenboden in die Hülse kann in einfacher Weise dadurch erzielt werden, dass sich der Zwischenboden an einem radialen Bund der Hülse abstützt.

Vorzugsweise weist die Hülse in einem Endbereich, welcher an einem eine Ausnehmung des Zwischenbodens umgebenden, axialen Bund anliegt, eine umlaufende Nut zur Aufnahme eines Dichtelementes auf. Eine aufwendige Abdichtung der ersten Arbeitskammer kann damit vermieden werden.

Gemäß einer vorteilhaften Ausführungsform kann zur Gewichtseinsparung der Zwischenboden aus Aluminium vorgesehen sein. Eine Ausgestaltung des Zwischenbodens aus Stahl ist für die Kraftübertragung auf die Hülse jedoch genauso denkbar.

Eine weitere Einsparung von Gewicht kann erzielt werden, indem Hülse aus Kunststoff oder Aluminium vorgesehen ist. Zudem kann die Hülse einfach hergestellt werden.

Bei einer Bremskraftverstärker-Variante mit wenigstens einem Zuganker, welcher das Gehäuse sowie eine Ausnehmung des Zwischenbodens zur Abstützung der Gehäusehalbschalen durchdringt und mit einem Bund an einer Innenseite der zweiten Gehäusehalbschale anliegt, kann vorzugsweise vorgesehen sein, dass die Hülse den Zuganker umgibt, wobei die Kraftableitung in die fahrzeugfeste Wand direkt über die zweite Gehäusehalbschale oder über den Bund des Zugankers erfolgt.

Eine einfache Positionierung der Hülse kann gemäß einer vorteilhaften Ausführungsform dadurch erreicht werden, dass der Zuganker wenigstens zwei Rippen zur Zentrierung der Hülse aufweist.

Vorzugsweise sind die Rippen L-förmig mit einem ersten und einem zweiten Schenkel ausgebildet, wobei der zweite Schenkel an dem Bund des Zugankers angeformt ist und die Hülse auf dem zweiten Schenkel aufliegt. Die Anlage der Hülse auf dem zweiten Schenkel stellt sicher, dass in diesem Bereich ein freier Strömungsquerschnitt vorhanden ist.

Eine alternative vorteilhafte Ausführungsform der Erfindung sieht vor, dass die Hülse auf einer Innenseite wenigstens zwei Rippen zur Zentrierung auf dem Zuganker aufweist. Die Zentrierung der Hülse gewährleistet die richtige Positionierung der Hülse auf dem Zuganker und damit die Luftführung zwischen den beiden Arbeitskammern.

Hierzu liegt vorzugsweise der Bund des Zugankers an den Rippen der Hülse an.

Bei einer anderen Bremskraftverstärker-Variante mit wenigstens einem rohrförmigen Verstärkungselement, welches das Gehäuse durchstreckt und mittels eines Anlageelementes an einer Innenseite der zweiten Gehäusehalbschale anliegt, wobei ein Schraubenelement zur Befestigung des Bremskraftverstärkers an der fahrzeugfesten Wand mit dem Verstärkungselement in Verbindung steht, kann vorzugsweise vorgesehen sein, dass sich die Hülse an dem Anlageelement abstützt und im Bereich der zweiten Arbeitskammer ein oder mehrere Ausschnitte aufweist.

Ferner kann bei einer weiteren Bremskraftverstärker-Variante, mit Befestigungselementen, welche zur Befestigung des Bremskraftverstärkers an der fahrzeugfesten Wand die zweite Gehäusehalbschale durchdringen und mit einem Kopfflansch an einer Innenseite der zweiten Gehäusehalbschale anliegen, vorzugsweise vorgesehen sein, dass sich die Hülse an dem Kopfflansch eines Befestigungselementes abstützt und im Bereich der zweiten Arbeitskammer ein oder mehrere Ausschnitte aufweist.

Weitere Merkmale, Vorteile und Anwendungsmöglichkeiten der Erfindung gehen aus den Unteransprüchen und der nachfolgenden Beschreibung eines Ausführungsbeispiels sowie anhand der Zeichnung hervor.

Es zeigt jeweils stark schematisiert:
- Figur 1: einen bekannten Bremskraftverstärker im Längsschnitt;
- Figur 2: einen Ausschnitt eines erfindungsgemäßen Bremskraftverstärkers in räumlicher Darstellung;
- Figur 3: einen vergrößerten Teil-Ausschnitt von Fig. 2 und
- Figur 4: einen weiteren vergrößerten Teil-Ausschnitt von Fig. 2.

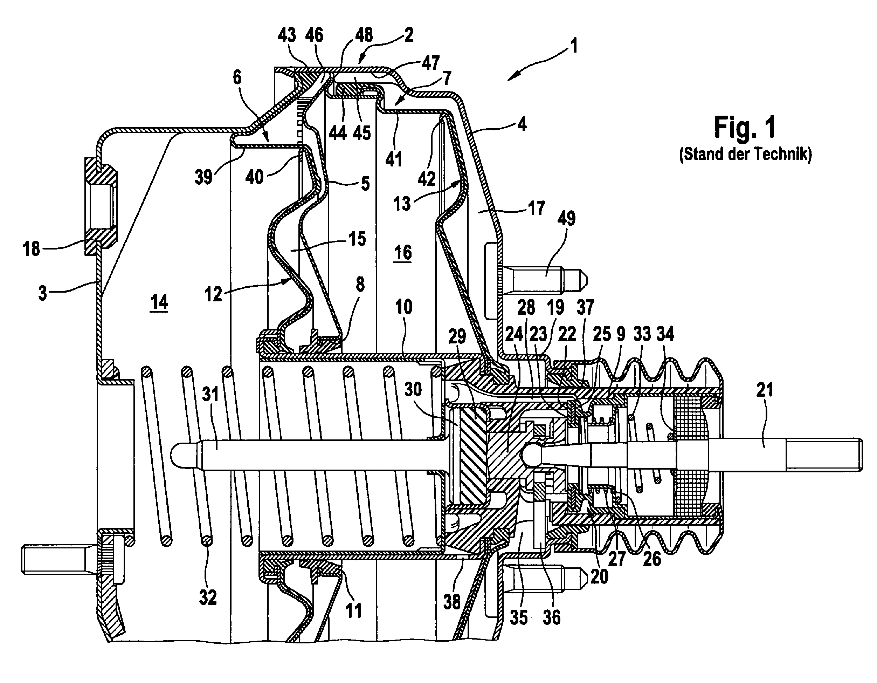

Die Fig. 1 zeigt einen bekannten pneumatischen Bremskraftverstärkers 1 in Tandembauweise im Längsschnitt, welcher ein Gehäuse 2 umfasst, das eine erste und eine zweite schalenförmige Verstärkergehäusehälfte oder Gehäusehalbschale 3,4 aufweist, die vorzugsweise mit Hilfe von umformtechnischen Maßnahmen miteinander verpresst sind. Der Innenraum des Gehäuses 2 wird mit Hilfe eines in etwa mittig angeordneten, ortsfesten Zwischenbodens 5 in einen vorderen, hauptzylinderseitigen Verstärkerraum 6 sowie einen hinteren, bremspedalseitigen Verstärkerraum 7 aufgeteilt, wobei der Zwischenboden 5 eine mittig angeordnete, kreisförmige Ausnehmung 8 aufweist, welche von einem Steuergehäuse 9 bzw. dessen zylindrischen Verlängerung 10 durchgriffen ist. Der Zwischenboden 5 liegt mittels eines Dichtelementes 11 dichtend an der Verlängerung 10 an.

Der vordere Verstärkerraum 6 wird durch eine erste bewegliche Wand 12 in eine erste Unterdruckkammer 14 konstanten Druckes und in eine erste Arbeitskammer 15 veränderlichen Druckes und der hintere Verstärkerraum 7 durch eine zweite bewegliche Wand 13 in eine zweite Unterdruckkammer 16 und eine zweite Arbeitskammer 17 unterteilt. Üblicherweise ist die erste Gehäusehalbschale 3 mit einem Dichtelement 18 für einen Unterdruckanschluss versehen, mittels dessen die erste Unterdruckkammer 14 an eine geeignete Unterdruckquelle, beispielsweise einen Ansaugkrümmer des Kraftfahrzeugmotors oder an eine Vakuumpumpe angeschlossen werden kann.

Die zweite Gehäusehalbschale 4 ist mit einem axialen Abschnitt 19 kleineren Durchmessers versehen, in dem das Steuergehäuse 9 mittels eines Dichtringes 37 abgedichtet axial bewegbar geführt ist. In dem Inneren des Steuergehäuses 9 ist ein Steuerventil 20 vorgesehen, das eine kontrollierte Belüftung der beiden Arbeitskammern 15,17 ermöglicht und dadurch die Druckdifferenz zwischen den Unterdruckkammern 14,16 und den Arbeitskammern 15,17 steuert.

Das Steuerventil 20 ist durch ein Eingangsglied 21 betätigbar, das mit einem, nicht dargestellten Bremspedal verbunden ist, und besteht aus einem, am Steuergehäuse 9 ausgebildeten ersten Dichtsitz 22, einem, an einem mit dem Eingangsglied 21 verbundenen Ventilkolben 24 ausgebildeten zweiten Dichtsitz 23 sowie einem mit beiden Dichtsitzen 22,23 zusammenwirkenden Ventilkörper 25, der mittels einer, sich an einem Führungselement 26 abstützenden Ventilfeder 27 gegen die Ventilsitze 22,23 gedrückt wird. Die zweite Arbeitskammer 17 ist mit der ersten Unterdruckkammer 14 über einen seitlich im Steuergehäuse 9 verlaufenden Kanal 28 verbindbar.

Die Bremskraft wird über eine stirnseitig am Steuergehäuse 9 anliegende gummielastische Reaktionsscheibe 29 sowie ein, einen Kopfflansch 30 aufweisendes Ausgangsglied 31 auf einen Betätigungskolben eines nicht dargestellten Hauptzylinders der Bremsanlage übertragen, der am unterdruckseitigen Ende des Bremskraftverstärkers 1 angebracht ist. Die an dem Eingangsglied 21 eingeleitete Eingangskraft wird auf die Reaktionsscheibe 29 mittels des Ventilkolbens 24 übertragen.

Eine in der Zeichnung schematisch dargestellte Rückstellfeder 32, die sich an der unterdruckseitigen Stirnwand des Verstärkergehäuses 2 abstützt, hält die beweglichen Wände 12,13 in der gezeigten Ausgangsstellung. Außerdem ist eine Rückholfeder 33 vorgesehen, die zwischen einem, an dem Eingangsglied 21 angeordneten Halteelement 34 und dem Führungselement 26 angeordnet ist und deren Kraft für eine Vorspannung des Ventilkolbens 24 bzw. seines Ventilsitzes 23 gegenüber dem Ventilkörper 25 sorgt.

Um die zweite Arbeitskammer 17 bei der Betätigung des Steuerventils 20 mit der Atmosphäre verbinden zu können, ist schließlich im Steuergehäuse 9 ein annähernd radial verlaufender Kanal 35 ausgebildet. Die Rückkehrbewegung des Ventilkolbens 24 am Ende eines Bremsvorganges wird dabei durch ein Querglied 36 begrenzt, das in der in der Zeichnung gezeigten Lösestellung des Bremskraftverstärkers 1 an dem Verstärkergehäuse 2 anliegt.

Die Verbindung zwischen der ersten und der zweiten Unterdruckkammer 14,16 erfolgt durch einen oder mehrere Durchbrüche 38 in der Verlängerung 10 des Steuergehäuses 9, die im Bereich zwischen dem Zwischenboden 5 und der zweiten beweglichen Wand 13 vorgesehen sind.

Die beweglichen Wände 12,13 weisen, wie aus Fig. 1 ersichtlich ist, jeweils eine flexible Rollmembran 39,41 sowie einen Membranteller 40,42 auf, wobei die Rollmembrane 39,41 radial außen mit jeweils einer umlaufenden Verdickung bzw. einem Dichtwulst 43,44 zur Einspannung der Rollmembran 39,41 versehen sind.

Eine pneumatische Verbindung der beiden Arbeitskammern 15,17 erfolgt über Verbindungskanäle 46, die im Verbindungsbereich der beiden Gehäusehalbschalen 3,4 vorgesehen sind. Aus Fig. 1 geht deutlich hervor, dass bei einer Betätigung des Steuerventils 20 Luft aus der Atmosphäre über den Kanal 35 im Steuergehäuse 9 in die zweite Arbeitskammer 17 strömt. In der zweiten Gehäusehalbschale 4 sind axial gerichtete Ausbuchtungen 45 vorgesehen, durch welche hindurch die Luft weiter zu einer Engstelle zwischen einer Innenseite 47 der zweiten Gehäusehalbschale 4 und einer radialen Außenseite 48 des Zwischenbodens 5 strömt. Über die Verbindungskanäle 46, welche durch eine Rippenstruktur des Dichtwulstes 43 der ersten Rollmembran 39 gebildet werden, strömt die Luft in die erste Arbeitskammer 15.

Zur Befestigung des Bremskraftverstärkers 1 an der fahrzeugfesten Wand sind Schrauben als Befestigungselemente 49 vorgesehen, welche die zweite Gehäusehalbschale 4 durchdringen und mit einem Kopfflansch an einer Innenseite der Gehäusehalbschale 4 anliegen.

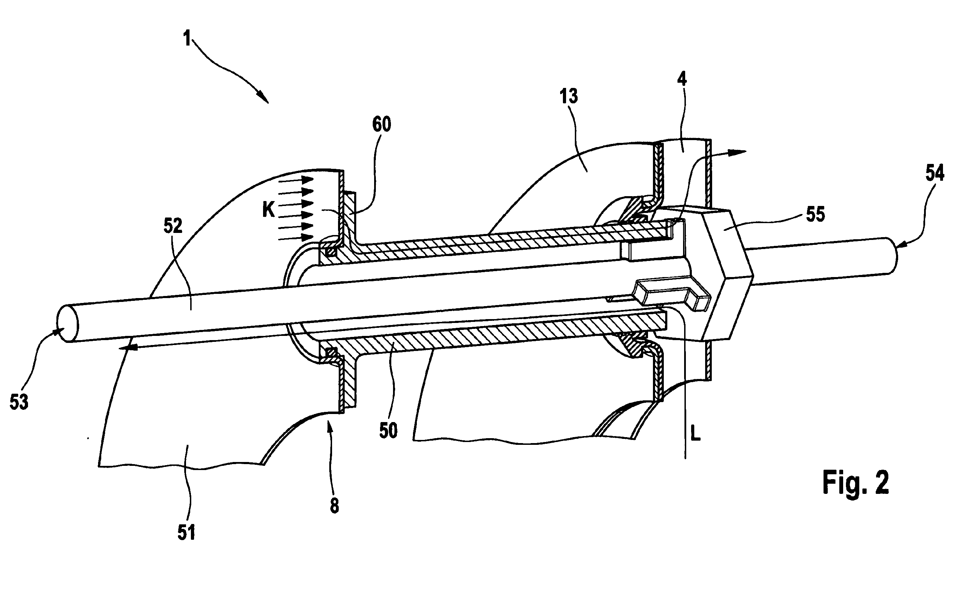

Den Fig. 2 bis 4 sind Ausschnitte eines Ausführungsbeispiels eines erfindungsgemäßen Bremskraftverstärkers 1 in TandemAusführung zu entnehmen. Der grundsätzliche Aufbau entspricht dem gemäß Fig. 1 beschriebenen, bekannten Bremskraftverstärker, so dass gleiche Bauteile mit gleichen Bezugszeichen versehen sind und auf eine wiederholte Beschreibung verzichtet wird, wobei die Erfindung nicht auf die gezeigte Ausführung einzelner Bauteile begrenzt ist und diese auch in abgewandelter Form vorgesehen sein können. Im Nachfolgenden wird lediglich auf die wesentlichen Unterschiede zum gezeigten Stand der Technik eingegangen.

Um einen in Hinblick auf Gewicht und Kosten verbesserten Bremskraftverstärker zu erhalten, ist bei dem erfindungsgemäßen Bremskraftverstärker 1 vorgesehen, dass der Verbindungskanal als zylindrische Hülse 50 vorgesehen ist, welche einen Zwischenboden 51 sowie die zweite bewegliche Wand 13 durchdringt, wobei die Hülse 50 eine Kraftableitung von dem Zwischenboden 51 in die nicht dargestellte fahrzeugfeste Wand ermöglicht. Hierdurch wird die bei Betätigung entstehende rückwärts gerichtete Kraft über die Hülse 50 in die fahrzeugfeste Wand eingeleitet, ohne das Gehäuse 2 zusätzlich zu belasten. Der Zwischenboden 51 ist damit weitgehend vom Gehäuse 2 entkoppelt gelagert. Durch diese Maßnahmen ist es möglich, die Blechdicke des Gehäuses 2 deutlich zu verringern. Zudem ermöglicht diese Ausgestaltung der Luftführung und der Kraftableitung eine vereinfachte Ausgestaltung des Zwischenbodens 51 vereinfacht auszugestalten.

Wie aus der nachfolgenden Beschreibung zu entnehmen ist, ist es im Rahmen der Erfindung möglich, die Kraftableitung in die fahrzeugfeste Wand durch eine mittelbare oder unmittelbare Abstützung der Hülse 50 an der zweiten Gehäusehalbschale 4 vorzusehen.

Bei der in den Fig. 2 bis 4 gezeigten Bremskraftverstärker-Variante verfügt der Bremskraftverstärker 1 über wenigstens einen Zuganker 52, welcher die Verstärkerräume 6,7 durchgreift und mit einem vorderen und einem hinteren Ende 53,54 aus den beiden Gehäusehalbschalen 3,4 hinausragt. Das vordere Ende 53 des Zugankers 52 dient der Befestigung eines nicht gezeichneten Hauptbremszylinders, welcher mit einem Flansch gegen eine plane Stirnfläche der vorderen Gehäusehalbschale 3 angepresst wird. Das hintere Ende 54 dient der Anordnung einer Einheit aus Hauptbremszylinder und Bremskraftverstärker 1 an der fahrzeugfesten Wand eines Kraftfahrzeugs, welche zumeist unmittelbar an eine plane Stirnfläche der Gehäusehalbschale 4 anlegbar ist. Auf der anderen Seite der fahrzeugfesten Wand, zumeist der sogenannten Spritz- oder Brandwand ist ein sog. Pedalbock angeordnet, durch den das hintere Ende 54 ebenfalls greift, um schließlich beispielsweise mit einer Mutter, derart verschraubt zu werden, dass die gewünschte Befestigung der Bremskraftverstärker-Hauptbremszylindereinheit an dem Fahrzeug bewerkstelligt ist.

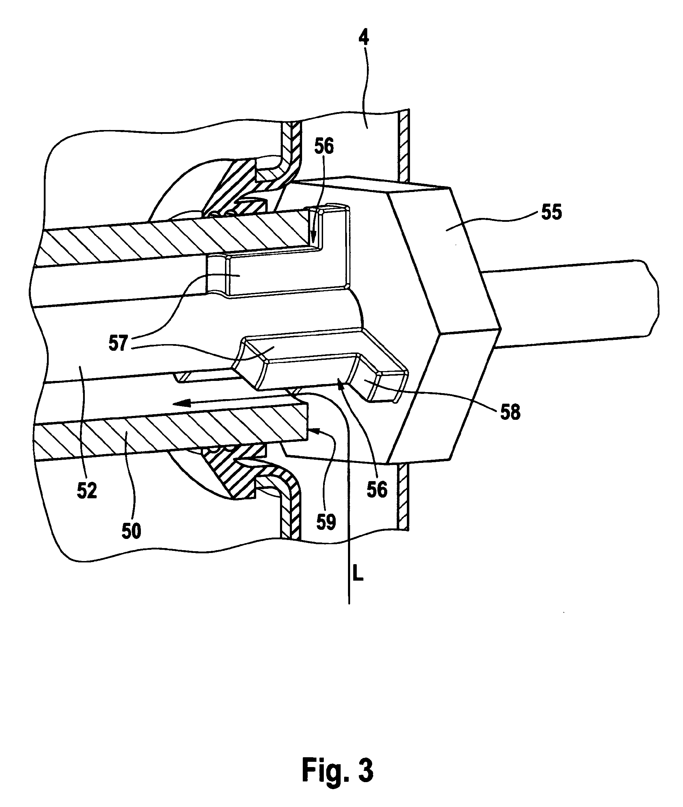

Wie Fig. 2 und insbesondere Fig. 3 zu entnehmen ist, welche einen Ausschnitt des erfindungsgemäßen Bremskraftverstärkers 1 darstellen, weist der Zuganker 52 zur Anlage an einer Innenseite der Gehäusehalbschale 4 einen Bund 55 auf, welcher wie gezeigt beispielsweise eine Sechskant-Form aufweisen kann.

Zur Zentrierung der Hülse 50 auf dem Zuganker 52 weist dieser wenigstens zwei, vorzugsweise jedoch wie in Fig. 2 und 3 dargestellt drei L-förmige Rippen 56 auf. Ein erster Schenkel 57 ist dabei an den Zuganker 52 angeformt und ein zweiter Schenkel 58 erstreckt sich auf dessen Bund 55. Die Hülse 50 liegt mit ihrem Ende 59 an den zweiten Schenkel 58 der Rippen 56 an, so dass zwischen dem Bund 55 und dem Ende 59 der Hülse 50 in einem Rippenzwischenraum ein Strömungsquerschnitt zum Luftaustausch zwischen den beiden Arbeitskammern 15,17 entsteht. Die Luftströmung L ist in den Fig. 2 und 3 mit dem Pfeil L deutlich erkennbar und die Kraftableitung ist mit dem Pfeil K dargestellt.

Bei einer nicht dargestellten alternativen Ausführungsform der Erfindung können die Rippen auf einer Innenseite der Hülse vorgesehen sein. Dabei ist es möglich, dass der Bund 55 des Zugankers 52 an den Rippen der Hülse anliegt.

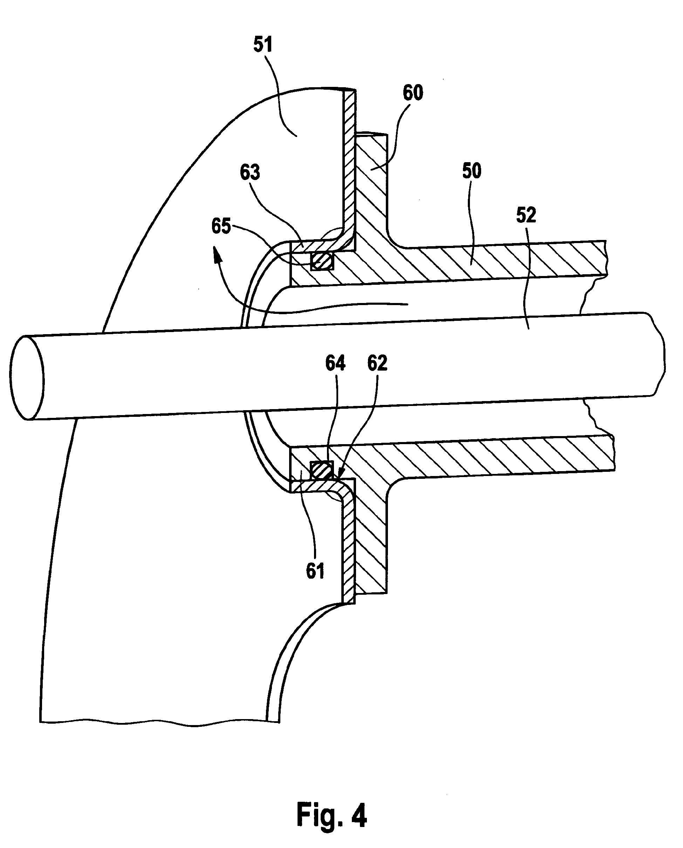

Zur Kraftableitung K von dem Zwischenboden 51 über die Hülse 50 weist diese einen radialen Bund 60 auf, an welchen sich der Zwischenboden 51 abstützt, wie insbesondere Fig. 4 zu entnehmen ist.

Weiter durchragt die Hülse 50 mit ihrem Endbereich 61 eine Ausnehmung 62 des Zwischenbodens 51, wobei der Endbereich 61 an einem die Ausnehmung 62 des Zwischenbodens 51 umgebenden, axialen Bund 63 anliegt. In einer umlaufenden Nut 64 der Hülse 50 ist in ihrem Endbereich 61 ein Dichtelement 65 zur Abdichtung der ersten Arbeitskammer 15 vorgesehen, welches beispielsweise als O-Ring ausgestaltet ist. Eine aufwendige Abdichtung der ersten Arbeitskammer 15 kann damit entfallen. Vorteilhafterweise ist es durch die vorstehend beschriebene Ausgestaltung der Luftführung und der Kraftableitung möglich, den Zwischenboden 51 vereinfacht auszugestalten. Dieser kann hierdurch gewichtssparend beispielsweise aus Aluminium hergestellt werden.

Die Hülse 27 ist in Hinblick auf Gewichts- und Kostenoptimierung aus Kunststoff oder Aluminium vorgesehen.

Eine nicht gezeigte Ausführungsform sieht vor, dass sich die Hülse direkt an der zweiten Gehäusehalbschale 4 abstützt. Um die Luftströmung zwischen den beiden Arbeitskammern 15,17 zu ermöglichen, weist die Hülse in diesem Fall im Bereich der zweiten Arbeitskammer 17 ein oder mehrere Ausschnitte auf, durch welche die Luft in einen Hülseninnenraum strömen kann.

Die beschriebene Luftführung mittels einer Hülse kann auch bei anderen Bremskraftverstärkervarianten eingesetzt werden.

So kann der Bremskraftverstärker beispielsweise wenigstens ein rohrförmiges Verstärkungselement aufweisen, welches das Gehäuse 2 durchstreckt und mittels eines Anlageelementes an einer Innenseite der zweiten Gehäusehalbschale 4 anliegt. Hierbei steht ein Schraubenelement zur Befestigung des Bremskraftverstärkers an der fahrzeugfesten Wand mit dem Verstärkungselement in Verbindung. Auch bei dieser Ausführung kann sich die erfindungsgemäße Hülse an dem Anlageelement oder direkt an der Gehäusehalbschale 4 abstützen und im Bereich der zweiten Arbeitskammer 17 ein oder mehrere Ausschnitte aufweisen.

Weist der erfindungsgemäße Bremskraftverstärker einer weiteren Ausführungsvariante wie in Fig. 1 gezeigte Befestigungselemente 49 auf, welche zur Befestigung des Bremskraftverstärkers an der fahrzeugfesten Wand die zweite Gehäusehalbschale 4 durchdringen und mit einem Kopfflansch an einer Innenseite der Gehäusehalbschale 4 anliegen, kann sich die Hülse an dem Kopfflansch eines Befestigungselementes 49 oder direkt an der Gehäusehalbschale 4 abstützen und im Bereich der zweiten Arbeitskammer 17 ein oder mehrere Ausschnitte aufweisen.

### Bezugszeichenliste

| | |
|---|---|
| 1 | Bremskraftverstärker |
| 2 | Gehäuse |
| 3 | erste Gehäusehalbschale |
| 4 | zweite Gehäusehalbschale |
| 5 | Zwischenboden |
| 6 | erster Verstärkerraum |
| 7 | zweiter Verstärkerraum |
| 8 | Ausnehmung |
| 9 | Steuergehäuse |
| 10 | Verlängerung |
| 11 | Dichtelement |
| 12 | erste bewegliche Wand |
| 13 | zweite bewegliche Wand |
| 14 | erste Unterdruckkammer |
| 15 | erste Arbeitskammer |
| 16 | zweite Unterdruckkammer |
| 17 | zweite Arbeitskammer |
| 18 | Dichtelement |
| 19 | Abschnitt |
| 20 | Steuerventil |
| 21 | Eingangsglied |
| 22 | erster Dichtsitz |
| 23 | zweiter Dichtsitz |
| 24 | Ventilkolben |
| 25 | Ventilkörper |
| 26 | Führungselement |
| 27 | Ventilfeder |
| 28 | Kanal |
| 29 | Reaktionsscheibe |
| 30 | Kopfflansch |
| 31 | Ausgangsglied |
| 32 | Rückstellfeder |
| 33 | Rückholfeder |
| 34 | Halteelement |
| 35 | Kanal |
| 36 | Querglied |
| 37 | Dichtring |
| 38 | Durchbruch |
| 39 | erste Rollmembran |
| 40 | erster Membranteller |
| 41 | zweite Rollmembran |
| 42 | zweiter Membranteller |
| 43 | Dichtwulst |
| 44 | Dichtwulst |
| 45 | Ausbuchtung |
| 46 | Verbindungskanal |
| 47 | Innenseite |
| 48 | Außenseite |
| 49 | Befestigungselement |
| 50 | Hülse |
| 51 | Zwischenboden |
| 52 | Zuganker |
| 53 | Ende |
| 54 | Ende |
| 55 | Bund |
| 56 | Rippe |
| 57 | Schenkel |
| 58 | Schenkel |
| 59 | Ende |
| 60 | Bund |
| 61 | Endbereich |
| 62 | Ausnehmung |
| 63 | Bund |
| 64 | Nut |
| 65 | Dichtelement |
| | |
| K | Kraftableitung |
| L | Luftströmung |

## Patentansprüche

1. Pneumatischer Bremskraftverstärker (1) in Tandembauweise, insbesondere für hydraulische Fahrzeugbremsanlagen mit einem Gehäuse (2) aus einer ersten und einer zweiten Gehäusehalbschale (3,4), dessen Innenraum mit Hilfe eines Zwischenbodens (51) in einen vorderen und einen hinteren Verstärkerraum (6,7) unterteilt ist, wobei der Zwischenboden (51) eine mittig angeordnete, kreisförmige Ausnehmung (8) aufweist, welche von einem Steuergehäuse (9) oder einer zylindrischen Steuergehäuseverlängerung (10) durchgriffen ist und der Zwischenboden (51) mittels eines Dichtelementes (11) dichtend an dem Steuergehäuse (9) oder der Steuergehäuseverlängerung (10) anliegt, mit einer ersten sowie einer zweiten beweglichen Wand (12,13), die den vorderen bzw. den hinteren Verstärkerraum (6,7) in eine erste Unterdruckkammer (14) und in eine erste Arbeitskammer (15) bzw. eine zweite Unterdruckkammer (16) und in eine zweite Arbeitskammer (17) unterteilen, mit wenigstens einem Verbindungskanal zwischen der ersten Arbeitskammer (15) und der zweiten Arbeitskammer (17) für einen Druckausgleich zwischen diesen beiden Arbeitskammern (15,17), wobei der Verbindungskanal als zylindrische Hülse (50) vorgesehen ist, welche den Zwischenboden (51) sowie die zweite bewegliche Wand (13) durchdringt, **dadurch gekennzeichnet, dass** die Hülse (50) eine Kraftableitung von dem Zwischenboden (51) in eine fahrzeugfeste Wand ermöglicht.

2. Pneumatischer Bremskraftverstärker (1) nach Anspruch 1, **dadurch gekennzeichnet, dass** sich die Hülse (50) mittelbar oder unmittelbar an der zweiten Gehäusehalbschale (4) abstützt.

3. Pneumatischer Bremskraftverstärker (1) nach Anspruch 2, **dadurch gekennzeichnet, dass** sich der Zwischenboden (51) an einem radialen Bund (60) der Hülse (50) abstützt.

4. Pneumatischer Bremskraftverstärker (1) nach Anspruch 3, **dadurch gekennzeichnet, dass** die Hülse (50) in einem Endbereich (61), welcher an einem eine Ausnehmung (62) des Zwischenbodens (51) umgebenden, axialen Bund (63) anliegt, eine umlaufende Nut (64) zur Aufnahme eines Dichtelementes (65) aufweist.

5. Pneumatischer Bremskraftverstärker (1) nach einem der vorangegangenen Ansprüche, **dadurch gekennzeichnet, dass** der Zwischenboden (51) aus Aluminium vorgesehen ist.

6. Pneumatischer Bremskraftverstärker (1) nach einem der vorangegangenen Ansprüche, **dadurch gekennzeichnet, dass** die Hülse (50) aus Kunststoff oder Aluminium vorgesehen ist.

7. Pneumatischer Bremskraftverstärker (1) nach einem der vorangegangenen Ansprüche 1 bis 6, mit wenigstens einem Zuganker (52), welcher das Gehäuse (2) sowie eine Ausnehmung (62) des Zwischenbodens (51) zur Abstützung der Gehäusehalbschalen (3,4) durchdringt und mit einem Bund (55) an einer Innenseite der zweiten Gehäusehalbschale (4) anliegt, **dadurch gekennzeichnet, dass** die Hülse (50) den Zuganker (52) umgibt, wobei die Kraftableitung in die fahrzeugfeste Wand direkt über die zweite Gehäusehalbschale (4) oder über den Bund (55) des Zugankers (52) erfolgt.

8. Pneumatischer Bremskraftverstärker (1) nach Anspruch 7, **dadurch gekennzeichnet, dass** der Zuganker (52) wenigstens zwei Rippen (56) zur Zentrierung der Hülse (50) aufweist.

9. Pneumatischer Bremskraftverstärker (1) nach Anspruch 8, **dadurch gekennzeichnet, dass** die Rippen (56) L-förmig mit einem ersten und einem zweiten Schenkel (57,58) ausgebildet sind, wobei der zweite Schenkel (58) an dem Bund (55) des Zugankers (52) angeformt ist und die Hülse (50) auf dem zweiten Schenkel (58) aufliegt.

10. Pneumatischer Bremskraftverstärker (1) nach Anspruch 7, **dadurch gekennzeichnet, dass** die Hülse auf einer Innenseite wenigstens zwei Rippen zur Zentrierung auf dem Zuganker (52) aufweist.

11. Pneumatischer Bremskraftverstärker (1) nach Anspruch 10, **dadurch gekennzeichnet, dass** der Bund (55) des Zugankers (52) an den Rippen der Hülse anliegt.

12. Pneumatischer Bremskraftverstärker (1) nach einem der vorangegangenen Ansprüche 1 bis 6, mit wenigstens einem rohrförmigen Verstärkungselement, welches das Gehäuse (2) durchstreckt und mittels eines Anlageelementes an einer Innenseite der zweiten Gehäusehalbschale (4) anliegt, wobei ein Schraubenelement zur Befestigung des Bremskraftverstärkers (1) an der fahrzeugfesten Wand mit dem Verstärkungselement in Verbindung steht, **dadurch gekennzeichnet, dass** sich die Hülse an dem Anlageelement abstützt und im Bereich der zweiten Arbeitskammer (17) ein oder mehrere Ausschnitte aufweist.

13. Pneumatischer Bremskraftverstärker (1) nach einem der vorangegangenen Ansprüche 1 bis 6, mit Befestigungselementen (49), welche zur Befestigung des Bremskraftverstärkers (1) an der fahrzeugfesten Wand die zweite Gehäusehalbschale (4) durchdringen und mit einem Kopfflansch an einer Innenseite der zweiten Gehäusehalbschale (4) anliegen, **dadurch gekennzeichnet, dass** sich die Hülse an dem Kopfflansch eines Befestigungselementes (49) abstützt und im Bereich der zweiten Arbeitskammer (17) ein oder mehrere Ausschnitte aufweist.

## Claims

1. Tandem-type pneumatic brake booster (1), in particular for hydraulic vehicle brake systems, having a housing (2) comprising a first and a second housing half shell (3, 4), the interior of which is divided with the aid of a partition (51) into a front and a rear booster chamber (6, 7), wherein the partition (51) has a centrally arranged, circular cavity (8), through which a control housing (9) or a cylindrical control housing extension (10) extends, and the partition (51) rests sealingly against the control housing (9) or the control housing extension (10) by means of a sealing element (11), having a first and a second movable wall (12, 13), which respectively subdivide the front and the rear booster chamber (6, 7) into a first low-pressure chamber (14) and a first working chamber (15) and into a second low-pressure chamber (16) and a second working chamber (17), having at least one connecting conduit between the first working chamber (15) and the second working chamber (17) in order to equalize the pressure between said two working chambers (15, 17), wherein the connecting conduit is provided as a cylindrical sleeve (50) which penetrates the partition (51) and the second movable wall (13), **characterized in that** said sleeve (50) allows forces to be deflected from the partition (51) to a vehicle-mounted wall.

2. Pneumatic brake booster (1) according to Claim 1, **characterized in that** the sleeve (50) is supported directly or indirectly against the second housing half shell (4).

3. Pneumatic brake booster (1) according to Claim 2, **characterized in that** the partition (51) is supported against a radial collar (60) on the sleeve (50).

4. Pneumatic brake booster (1) according to Claim 3, **characterized in that** the sleeve (50) has an encircling groove (64) for accommodating a sealing element (65) in an end region (61) which rests against an axial collar (63) surrounding a cavity (62) in the partition (51).

5. Pneumatic brake booster (1) according to one of the preceding claims, **characterized in that** the partition (51) is made of aluminum.

6. Pneumatic brake booster (1) according to one of the preceding claims, **characterized in that** the sleeve (50) is made of plastic or aluminum.

7. Pneumatic brake booster (1) according to one of preceding Claims 1 to 6, having at least one tie rod (52), which penetrates the housing (2) and a cavity (62) in the partition (51) in order to support the housing half shells (3, 4) and rests by means of a collar (55) against an inner side of the second housing half shell (4), **characterized in that** the sleeve (50) surrounds the tie rod (52), with the forces being deflected into the vehicle-mounted wall directly via the second housing half shell (4) or via the collar (55) of the tie rod (52).

8. Pneumatic brake booster (1) according to Claim 7, **characterized in that** the tie rod (52) has at least two ribs (56) for centering the sleeve (50).

9. Pneumatic brake booster (1) according to Claim 8, **characterized in that** the ribs (56) are of L-shaped design with a first and a second leg (57, 58), the second leg (58) being formed integrally on the collar (55) of the tie rod (52), and the sleeve (50) resting on the second leg (58).

10. Pneumatic brake booster (1) according to Claim 7, **characterized in that** the sleeve has at least two ribs on an inner side to ensure centering on the tie rod (52).

11. Pneumatic brake booster (1) according to Claim 10, **characterized in that** the collar (55) of the tie rod (52) rests against the ribs of the sleeve.

12. Pneumatic brake booster (1) according to one of preceding Claims 1 to 6, having at least one tubular reinforcing element, which extends through the housing (2) and rests against an inner side of the second housing half shell (4) by means of a contact element, wherein a screw element for fastening the brake booster (1) on the vehicle-mounted wall is connected to the reinforcing element, **characterized in that** the sleeve is supported against the contact element and has one or more cutouts in the region of the second working chamber (17).

13. Pneumatic brake booster (1) according to one of preceding Claims 1 to 6, having fastening elements (49), which penetrate the second housing half shell (4) in order to fasten the brake booster (1) on the vehicle-mounted wall and rest by means of a head flange against an inner side of the second housing half shell (4), **characterized in that** the sleeve is supported against the head flange of a fastening element (49) and has one or more cutouts in the region of the second working chamber (17).

## Revendications

1. Servofrein pneumatique (1) de construction en tandem, notamment pour des systèmes de freinage hydrauliques de véhicules, comprenant un boîtier (2) constitué d'une première et d'une deuxième demi-coque de boîtier (3, 4), dont l'espace interne est divisé à l'aide d'un fond intermédiaire (51) en un espace d'amplificateur avant (6) et un espace d'amplificateur arrière (7), le fond intermédiaire (51) présentant un évidement (8) disposé centralement, de forme circulaire, qui est traversé par un boîtier de commande (9) ou un prolongement cylindrique (10) d'un boîtier de commande, et le fond intermédiaire (51) s'appliquant hermétiquement au moyen d'un élément d'étanchéité (11) contre le boîtier de commande (9) ou le prolongement (10) de boîtier de commande, comprenant une première et une deuxième paroi mobile (12, 13) qui divisent l'espace d'amplificateur avant, respectivement arrière (6, 7) en une première chambre de dépression (14) et une première chambre de travail (15) respectivement une deuxième chambre de dépression (16) et une deuxième chambre de travail (17), comprenant au moins un conduit de liaison entre la première chambre de travail (15) et la deuxième chambre de travail (17) pour un équilibrage de la pression entre ces deux chambres de travail (15, 17), le conduit de liaison étant prévu sous forme de douille cylindrique (50) qui traverse le fond intermédiaire (51) ainsi que la deuxième paroi mobile (13), **caractérisé en ce que** la douille (50) permet une déviation des forces depuis le fond intermédiaire (51) dans une paroi fixée au boîtier.

2. Servofrein pneumatique (1) selon la revendication 1, **caractérisé en ce que** la douille (50) s'appuie directement ou indirectement sur la deuxième demi-coque de boîtier (4).

3. Servofrein pneumatique (1) selon la revendication 2, **caractérisé en ce que** le fond intermédiaire (51) s'appuie contre un épaulement radial (60) de la douille (50).

4. Servofrein pneumatique (1) selon la revendication 3, **caractérisé en ce que** la douille (50), dans une région d'extrémité (61) qui s'applique contre un épaulement axial (63) entourant un évidement (62) du fond intermédiaire (51), présente une rainure périphérique (64) pour recevoir un élément d'étanchéité (65).

5. Servofrein pneumatique (1) selon l'une quelconque des revendications précédentes, **caractérisé en ce que** le fond intermédiaire (51) est prévu en aluminium.

6. Servofrein pneumatique (1) selon l'une quelconque des revendications précédentes, **caractérisé en ce que** la douille (50) est en plastique ou en aluminium.

7. Servofrein pneumatique (1) selon l'une quelconque des revendications précédentes 1 à 6, comprenant au moins un tirant d'ancrage (52), qui traverse le boîtier (2) ainsi qu'un évidement (62) du fond intermédiaire (51) pour supporter les demi-coques de boîtier (3, 4) et qui s'applique avec un épaulement (55) contre un côté intérieur de la deuxième demi-coque de boîtier (4), **caractérisé en ce que** la douille (50) entoure le tirant d'ancrage (52), la déviation des forces dans la paroi fixée au boîtier ayant lieu directement par le biais de la deuxième demi-coque de boîtier (4) ou par le biais de l'épaulement (55) du tirant d'ancrage (52).

8. Servofrein pneumatique (1) selon la revendication 7, **caractérisé en ce que** le tirant d'ancrage (52) présente au moins deux ailes (56) pour le centrage de la douille (50).

9. Servofrein pneumatique (1) selon la revendication 8, **caractérisé en ce que** les ailes (56) sont réalisées en forme de L avec une première et une deuxième branche (57, 58), la deuxième branche (58) étant façonnée sur l'épaulement (55) du tirant d'ancrage (52) et la douille (50) reposant sur la deuxième branche (58).

10. Servofrein pneumatique (1) selon la revendication 7, **caractérisé en ce que** la douille présente, sur un côté intérieur, au moins deux ailes pour le centrage sur le tirant d'ancrage (52).

11. Servofrein pneumatique (1) selon la revendication 10, **caractérisé en ce que** l'épaulement (55) du tirant d'ancrage (52) s'applique sur les ailettes de la douille.

12. Servofrein pneumatique (1) selon l'une quelconque des revendications précédentes 1 à 6, comprenant au moins un élément d'amplification de forme tubulaire, qui traverse le boîtier (2) et qui s'applique au moyen d'un élément de butée contre un côté intérieur de la deuxième demi-coque de boîtier (4), un élément fileté pour la fixation du servofrein (1) à la paroi fixée au véhicule étant en liaison avec l'élément amplificateur, **caractérisé en ce que** la douille s'appuie sur l'élément de butée et présente dans la région de la deuxième chambre de travail (17) une ou plusieurs entailles.

13. Servofrein pneumatique (1) selon l'une quelconque des revendications précédentes 1 à 6, comprenant des éléments de fixation (49) qui, pour la fixation du servofrein (1) à la paroi fixée au véhicule, traversent la deuxième demi-coque de boîtier (4) et s'appliquent avec une bride de tête contre un côté intérieur de la deuxième demi-coque de boîtier (4), **caractérisé en ce que** la douille s'appuie contre la bride de tête d'un élément de fixation (49) et présente dans la région de la deuxième chambre de travail (17) une ou plusieurs entailles.
